# EUROPÄISCHE PATENTSCHRIFT

(11) **EP 2 202 592 B1**
(45) Veröffentlichungstag und Bekanntmachung des Hinweises auf die Patenterteilung: **08.03.2017**
(21) Anmeldenummer: 10002850.5
(22) Anmeldetag: 09.07.2008
(51) Int. Cl.: G05B 9/03, G05B 9/02, H01H 47/00

(54) **Sicherheitsvorrichtung zum mehrkanaligen Steuern einer sicherheitstechnischen Einrichtung**
Safety device using multiple channels to control a safety device
Dispositif de sécurité destiné à la commande à plusieurs canaux d'un dispositif de sécurité

(30) Priorität: 12.07.2007 DE 102007032827
(43) Veröffentlichungstag der Anmeldung: 30.06.2010
(62) Teilanmeldung aus: 08773927.2
(73) Patentinhaber: Phoenix Contact GmbH & Co. KG, 32825 Blomberg (DE)
(72) Erfinder: Frevert, Henning, 33607 Bielefeld (DE)
(74) Vertreter: Kampfenkel, Klaus

(56) Entgegenhaltungen:
- WO-A-01/75532
- WO-A-2007/014725
- DE-A1-102004 020 995

## Beschreibung

Die Erfindung betrifft eine Sicherheitsvorrichtung zum mehrkanaligen Steuern einer sicherheitstechnischen Einrichtung nach der Patentanmeldung Nr. 10 2006 001805.

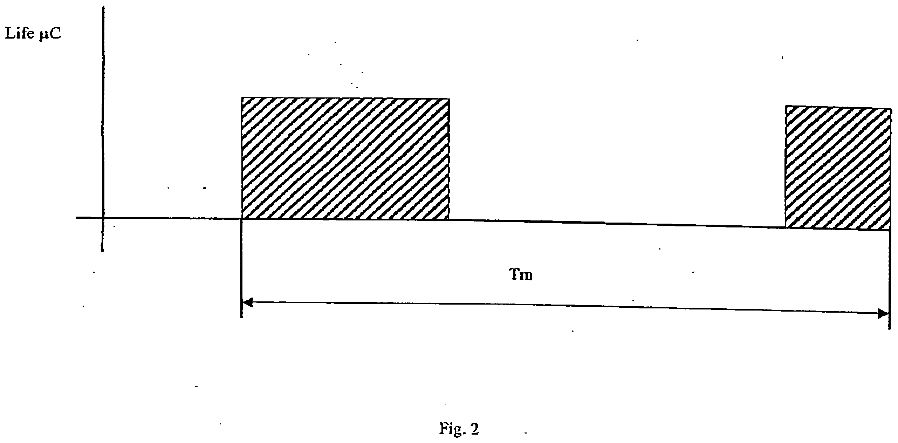

Die Patentanmeldung Nr. 10 2006 001805 offenbart eine mehrkanalige Sicherheitsvorrichtung mit der eine sicherheitstechnische Einrichtung wie zum Beispiel ein Industrieroboter als Komponente einer Automatisierungsanlage oder die komplette Automatisierungsanlage in einen gesicherten Zustand gefahren werden kann. Ein sicherer Zustand liegt beispielsweise vor, wenn die Stromversorgung des Industrieroboters oder der Automatisierungsanlage abgeschaltet oder eine Sicherheitstür verriegelt wird, die den Zugang zum Industrieroboter verhindert. Die Sicherheitsvorrichtung weist eine durch einen Mikroprozessor gesteuerte Steuereinrichtung und eine weitere, rein hardwarebasierte Steuereinrichtung auf. Die hardwarebasierte Steuereinrichtung zeichnet sich dadurch aus, dass sie nicht durch einen Mikroprozessor gesteuert wird, sondern eine schaltungstechnische Realisierung, vorzugsweise ein Monoflop als Schalt- oder Steuereinheit verwendet. Beiden Steuereinrichtungen wird ein moduliertes Eingangssignal zugeführt. Das Modulationssignal zeigt an, ob die Mikroprozessor gesteuerte Steuereinrichtung fehlerfrei arbeitet. Insbesondere weist das Modulationssignal darauf hin, ob der Mikroprozessor sicherheitsrelevante Programme oder Programmteile korrekt abarbeitet. Ein sicherheitsrelevantes Programm kann ein Diagnoseverfahren ausführen, die Stromversorgung der Steuereinrichtung prüfen, Systemparameter, wie zum Beispiel die Kontaktstellungen eines von den Steuereinrichtungen angesteuerten Relais abfragen, den Betriebszustand der hardwarebasierten Steuereinrichtung zyklisch abfragen und dergleichen. Wenn der Mikroprozessor sicherheitsrelevante Programme oder Programmteile, das können Unterprogramme sein, nicht wie spezifiziert abarbeitet, verharrt das Modulationssignal in einem statischen Zustand, der einem anhaltenden High- oder Low-Pegel entspricht. Beispielsweise gibt die Steuereinrichtung einen High-Pegel als Modulationssignal aus, wenn ein sicherheitsrelevantes Programm nicht gestartet wird. Ein Low-Pegel kann dann von der Steuereinrichtung als Modulationssignal erzeugt werden, wenn ein sicherheitsrelevantes Programm nicht, wie spezifiziert, beendet wird. Im ordnungsgemäßen Betrieb erzeugt die Mikroprozessor gesteuerte Steuereinrichtung ein dynamisches Modulationssignal, wie es beispielsweise in Fig. 2 gezeigt ist. Nur wenn ein dynamisches Signal am Eingang der hardwarebasierten Steuereinrichtung anliegt, wird eine Schalteinrichtung derart angesteuert, dass eine sicherheitstechnische Einrichtung, zum Beispiel ein Industrieroboter, eine Automatisierungsanlage und dergleichen, ordnungsmäßig betrieben werden kann. Liegt ein statisches Signal an der hardwarebasierten Steuereinrichtung an, wird die Schalteinrichtung deaktiviert, so dass der Industrieroboter in einen gesicherten Zustand gefahren wird. Dank der mehrkanaligen Sicherheitsvorrichtung kann eine sicherheitstechnische Einrichtung von der hardwarebasierten Steuereinrichtung in einen sicheren Zustand gefahren werden, auch wenn die Mikroprozessor gesteuerte Steuereinrichtung fehlerhaft arbeitet. Wird ein Monoflop in der hardwarebasierten Steuereinrichtung als Steuereinheit verwendet, darf die Monozeit nicht länger als die spezifizierte Sicherheitsausschaltzeit sein. Sicherheitskritische Fehler in der hardwarebasierten Steuereinrichtung kann die Mikroprozessor gesteuerte Steuereinrichtung erkennen, da ihr die Übertragungsfunktion der hardwarebasierten Steuereinrichtung, z. B. die Übertragungsfunktion des Monoflops, bekannt ist, und ihr zudem das Eingangs- und Ausgangssignal der hardwarebasierten Steuereinrichtung zugeführt werden. Aus der Übertragungsfunktion und dem Eingangssignal der hardwarebasierten Steuereinrichtung kann die Mikroprozessor gesteuerte Steuereinrichtung das zu erwartende Ausgangssignal der hardwarebasierten Steuereinrichtung berechnen und dieses dann mit dem rückgekoppelten Ausgangssignal vergleichen. Stimmen die beiden Signale nicht überein, schaltet die Mikroprozessor gesteuerte Steuereinrichtung die Schalteinrichtung derart an, dass die sicherheitstechnische Einrichtung in den sicheren Zustand gefahren werden kann.

Automatisierungsanlagen umfassen in der Regel Feldbussysteme, an die Aktoren, Sensoren sowie über- und/oder untergeordnete Steuer- und Überwachungseinrichtungen angeschaltet sein können. Eine wichtige Anforderung an derartige Automatisierungsanlagen ist, dass insbesondere bei Auftritt eines Fehlers eine fehlerhafte sicherheitstechnische Komponente, z. B. ein Aktor oder sogar die gesamte Automatisierungsanlage in einen gesicherten Zustand gefahren werden kann. Um ein sicheres Abschalten der Automatisierungsanlage oder eines fehlerhaften Aktors zu ermöglichen, muss sichergestellt sein, dass ein definiertes Eingangssignal, welches die Automatisierungsanlage in den sicheren Zustand fahren soll, immer als ein Ausschaltsignal interpretiert wird.

Bei Anlagen und Geräten, die zu einer bestimmten Sicherheitskategorie gehören, werden beispielsweise mehrkanalige Überwachungssysteme verwendet, die unabhängig voneinander arbeitende Subsysteme enthalten, die jeweils für sich die Anlage oder einzelne Geräte in einen gesicherten Zustand fahren können. Die mehrkanaligen oder redundant aufgebauten Überwachungssysteme sind weiterhin derart ausgebildet, dass die Subsysteme die Funktionsfähigkeit des jeweils anderen Subsystems überwachen können. Die gegenseitige Überwachung erfolgt in der Regel durch einen bidirektionalen Austausch von Statusdaten. Bei den bekannten mehrkanaligen Überwachungssystemen weist jedes Subsystem einen eigenen Mikroprozessor auf, wobei jedes Subsystem die Anlage in einen sicheren Zustand fahren kann.

Eine derartige mehrkanalige Sicherheitsvorrichtung ist ebenfalls aus der WO2007/014725 A bekannt, welche den Oberbegriff des Anspruchs 1 bildet.

Der vorliegenden Erfindung liegt die Aufgabe zugrunde, die eingangs beschriebene Sicherheitsvorrichtung derart weiter zu entwickeln, dass die Bedingungen der Kat. 4 der DIN EN 954 erfüllt werden.

Kat. 4 der DIN EN 954 verlangt unter Anderem, dass Fehler in den Leitungen zu und von einem Sensor, z. B. ein Not-Aus-Taster, erkannt werden. Derartige Fehler können Kurzschlüsse in den zu- oder abgehenden Leitungen zur Betriebsspannung oder nach Masse oder auch Querschlüsse zwischen den Leitern sein. Zudem verlangt Kat. 4 der DIN EN 954, dass ein Fehler in der Mikroprozessor gesteuerten Steuereinrichtung beim Zustandswechsel, insbesondere beim Einschalten der sicherheitstechnischen Einrichtung, von der anderen Steuereinrichtung erkannt wird.

Ein Kerngedanke der Erfindung ist darin zu sehen, Maßnahmen bereitzustellen, mit denen die Mikrocomputer gesteuerte Steuereinrichtung und/oder die hardwarebasierte Steuereinrichtung Kurzschlüsse und Querschlüsse in den Leitungen zu und von einem Sensor erkennen und unter Ansprechen auf einen erkannten Kurzschluss oder Querschluss die überwachte sicherheitstechnische Einrichtung in den gesicherten Zustand fahren können. Eine zusätzliche oder fakultative Maßnahme besteht darin, die hardwarebasierte Sicherheitseinrichtung zu deaktivieren, wenn beim Starten oder Anfahren der sicherheitstechnischen Einrichtung die Mikroprozessor gesteuerte Steuereinrichtung nicht mehr in der Lage ist, die sicherheitstechnische Einrichtung in einen sicheren Zustand zu fahren. In diesem Fall hält die hardwarebasierte Steuereinrichtung die sicherheitstechnische Einrichtung im sichern Zustand, d. h. die sicherheitstechnische Einrichtung kann nicht betrieben werden. An dieser Stelle sei darauf hingewiesen, das mit einer Mikroprozessor gesteuerten Steuereinrichtung eine Einrichtung zu verstehen ist, die mittels eines programmgesteuerten Mikroprozessors entscheidet, ob die sicherheitstechnische Einrichtung in Betrieb genommen, z. B. anfahren, oder in einen sichern Zustand gefahren werden soll. Unter einer hardwarebasierten Steuereinrichtung ist eine Einrichtung zu verstehen, die anstelle eines Mikroprozessors eine elektronische Schaltung, z. B. ein Monoflop, enthält, welche bei Anlegen eines Eingangssignals ein vorbestimmtes Ausgangssignal erzeugt.

Das oben genannte technische Problem löst die Erfindung mit den Merkmalen des Anspruchs 1.

Danach ist eine Sicherheitsvorrichtung zum mehrkanaligen Steuern einer sicherheitstechnischen Einrichtung vorgesehen.

An dieser Stelle sei darauf hingewiesen, dass es sich bei einer sicherheitstechnischen Einrichtung um einen Aktor einer Automatisierungsanlage, beispielsweise um einen Industrieroboter, eine ausführbare sicherheitstechnische Anwendung und/oder um eine Automatisierungsanlage selbst handeln kann. Hierzu ist eine erste, mikroprozessorgesteuerte Steuereinrichtung vorgesehen, die eine Signalerzeugungseinrichtung zum Erzeugen eines ersten Überwachungssignals aufweist. Das erste Überwachungssignal zeigt den aktuellen Betriebszustand der ersten Steuereinrichtung an. Vorzugsweise zeigt das erste Überwachungssignal an, ob der Mikroprozessor der ersten Steuereinrichtung in einer spezifizierten Weise arbeitet. Weiterhin sind eine zweite Steuereinrichtung sowie eine von der ersten und zweiten Steuereinrichtung ansteuerbare Schalteinrichtung vorgesehen. Die Schalteinrichtung kann die sicherheitstechnische Einrichtung einschalten oder in einen gesicherten Zustand fahren. An dieser Stelle sei erwähnt, dass vorteilhafterweise die Schalteinrichtung die sicherheitstechnische Einrichtung einschaltet, wenn sie von beiden Steuereinrichtungen aktiviert wird, wohingegen die sicherheitstechnische Einrichtung in einen gesicherten Zustand gefahren werden kann, wenn sie von wenigstens einer der beiden Steuereinrichtungen deaktiviert wird. Die zweite Steuereinrichtung weist eine hardwarebasierte Schalteinrichtung auf, die unter Ansprechen auf das Überwachungssignal die Schalteinrichtung derart ansteuert, dass die sicherheitstechnische Einrichtung bei einem fehlerhaften Betrieb der ersten Steuereinrichtung in einen sicheren Zustand gefahren werden kann. Bei einer zweckmäßigen Ausführungsform geschieht dies dann, wenn der Mikroprozessor nicht mehr die spezifizierten Funktionen ausführt. Die Signalerzeugungseinrichtung liefert ein zweites Überwachungssignal, wobei die Eingangsstufe zum Modulieren eines von der ersten extern anschaltbaren Sensoreinrichtung kommenden zweiten Eingangssignals mit dem von der Signalerzeugungseinrichtung erzeugten zweiten Überwachungssignal ausgebildet ist. Das zweite modulierte Eingangssignal wird zur Auswertung der ersten Steuereinrichtung und das erste modulierte Eingangssignal wird zur Auswertung der ersten und zweiten Steuereinrichtung zugeführt.

Gemäß einer vorteilhaften Weiterbildung handelt es sich bei der externen anschaltbaren Sensoreinrichtung um einen passiven Sensor. Das erste Überwachungssignal ist mittels eines ersten Tasters über den extern angeschalteten passiven Sensor als das erste Eingangssignal der Eingangsstufe zuführbar. Das zweite Überwachungssignal ist mittels eines zweiten Tasters über den extern angeschalteten passiven Sensor als das zweite Eingangssignal der Eingangsstufe zuführbar.

Die Erfindung wird nachfolgend anhand zweier Ausführungsbeispiele in Verbindung mit den beiliegenden Zeichnungen näher erläutert. Es zeigen:
- Fig. 1: ein schematisches Blockschaltbild einer Sicherheitsvorrichtung zum mehrkanaligen Steuern einer sicherheitstechnischen Einrichtung, bei der ein Freigabesignal erzeugt wird,
- Fig. 2: den zeitlichen Verlauf eines Überwachungssignals, welches von der in Fig. 1 gezeigten ersten Steuereinrichtung geliefert wird,
- Fig. 3: ein schematisch Blockschaltbild einer alternativen Sicherheitsvorrichtung, bei der im Unterschied zu der in Fig. 1 gezeigten Sicherheitsvorrichtung zwei Überwachungssignale von der ersten Steuereinrichtung erzeugt werden,
- Fig. 4: die zeitlich versetzten Überwachungssignale, die von der in Fig. 3 gezeigten ersten Steuereinrichtung geliefert werden,
- Fig. 5: eine Freigabesignal-Halteschaltung für das in den Fig. 1 und 3 gezeigte Monoflop, und
- Fig. 6: eine Schaltungsanordnung zur Einstellung der Reaktionszeit des in Fig. 1 und 3 gezeigten Monoflops.

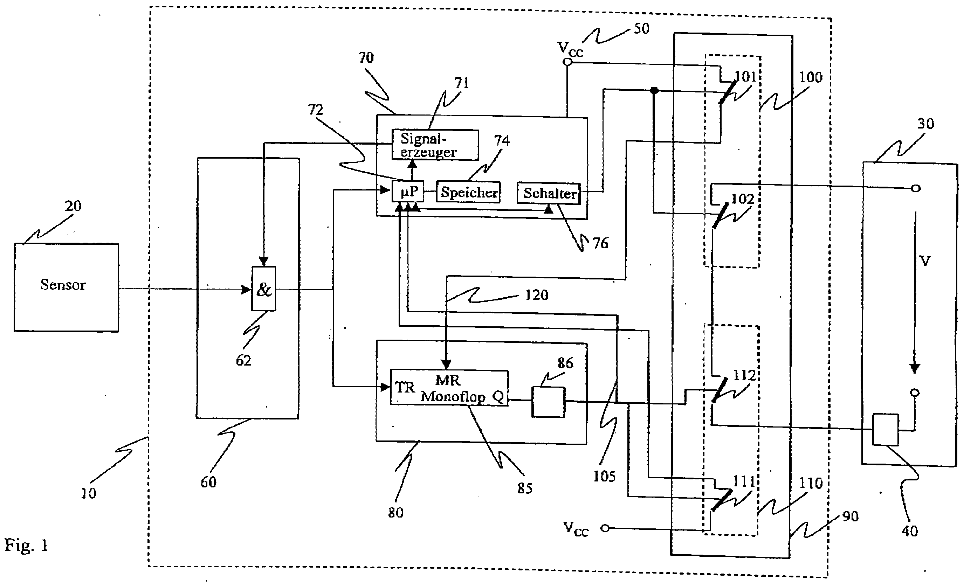

Fig. 1 zeigt eine beispielhafte mehrkanalige Sicherheitsvorrichtung 10, an die ein aktiver Sensor 20, beispielsweise eine Schutztür angeschlossen ist. Ausgangsseitig ist eine sicherheitstechnische Einrichtung 30 angeschlossen, die symbolisch durch einen beispielhaften Industrieroboter 40 und eine Versorgungsspannung V dargestellt ist. Selbstverständlich können an eine solche Sicherheitsvorrichtung auch mehrere Sensoren und sicherheitstechnische Einrichtungen angeschlossen werden.

Für den Fall, dass es sich bei dem Sensor 20 um einen aktiven Sensor handelt, der selbstständig ein Ausgangssignal erzeugen kann, ist eine Eingangsstufe 60 vorgesehen, die einen Modulator 62 aufweist, der im vorliegenden Beispiel als UND-Gatter ausgebildet ist. An das UND-Gatter 62 wird zum einen das Ausgangssignal des Sensors 20 angelegt. Weiterhin ist eine erste mikroprozessorgesteuerte Steuereinrichtung 70 vorgesehen, die eine Überwachungssignal-Erzeugungseinrichtung 71, einen Mikroprozessor 72, wenigstens einen Speicher 74 und einen Schalter 76 aufweisen kann. Der Mikroprozessor 72 ist sowohl mit der Überwachungssignal-Erzeugungseinrichtung 71, dem Schalter 76 als auch mit dem Speicher 74 verbunden. Die Überwachungssignal-Erzeugungseinrichtung 71 erzeugt ein Überwachungssignal, welches im ordnungsgemäßen Betrieb des Mikroprozessors den in Fig. 2 gezeigten Verlauf hat. Der Mikroprozessor 72 führt beispielsweise vordefinierte Diagnose- und/oder Überwachungsfunktionen durch, die bei ordnungsgemäßer Durchführung zu dem in Fig. 2 gezeigten Wechselsignal führen. Beispielsweise wird ein High-Pegel erzeugt, sobald der Mikroprozessor 72 eine sicherheitsrelevante Überwachungsroutine durchführt, wobei der High-Pegel solange erzeugt wird, wie die Überwachungsroutine abgearbeitet wird. Während der Überwachungsroutine kann der Mikroprozessor 72 vordefinierte Schnittstellen, den Inhalt des Speichers 74 und je nach Implementierung andere Kontrollpunkte abfragen. Wird eine gestartete sicherheitsrelevante Routine nicht beendet, so verharrt das Überwachungssignal im statischen Zustand, welches ein Gleichsignal darstellt. In ähnlicher Weise erzeugt die Überwachungssignal-Erzeugungseinrichtung 71 einen statischen Low-Pegel, sofern eine Überwachungsroutine überhaupt nicht gestartet wird.

In dem Speicher 74 stehen beispielsweise die Anweisungen für den Mikroprozessor 72 zur Durchführung der diagnose- und sicherheitsrelevanten Überwachungsroutinen. Das Ausgangssignal der Überwachungssignal-Erzeugungseinrichtung 71, welches vorzugsweise ein digitales Signal ist, wird an einen zweiten Eingang des UND-Gatters 62 der Eingangsstufe 62 angelegt.

Neben der mikroprozessorgesteuerten Steuereinrichtung 70 weist die Sicherheitsvorrichtung 10 eine rein hardwaremäßig aufgebaute zweite Steuereinrichtung 80 auf, die als hardwaremäßige Realisierung im vorliegenden Beispiel ein Monoflop 82 aufweist. Das vom UND-Gatter 62 modulierte Ausgangssignal wird als Eingangssignal dem Mikroprozessor 72 der ersten Steuereinrichtung 70 und einem Triggereingang des Monoflops 85 der zweiten Steuereinrichtung 80 zugeführt. Um die sicherheitstechnische Einrichtung 30 einschalten oder abschalten zu können, weist die Sicherheitsvorrichtung 10 eine ansteuerbare Schalteinrichtung 90, auch Ausgangsstufe genannt, auf. Die Ausgangsstufe 90 weist ein erstes Sicherheitsrelais 100 auf, welches über den Schalter 76 der ersten Steuereinrichtung 70 angesteuert werden kann. Die erste Steuereinrichtung 70 und das Sicherheitsrelais 100 bilden zusammen den Kanal 1 der mehrkanaligen Steuervorrichtung 10. Das Sicherheitsrelais 100 weist zwangsgeführte Kontakte 101 und 102 auf, wobei der Kontakt 101 als Öffnerkontakt und der Kontakt 102 als Schließerkontakt fungieren. Unter zwangsgeführten Kontakten versteht man Kontakte, die niemals den gleichen Zustand annehmen können. Ist Kontakt 101 geschlossen, so ist zwangsweise der Kontakt 102 geöffnet und umgekehrt. Die Kontakte 101 und 102 des in Fig. 1 symbolisch dargestellten Sicherheitsrelais 100 sind über den Schalter 76 der ersten Steuereinrichtung ansteuerbar, wobei der Schalter 76 im Ansteuerungskreis des Sicherheitsrelais 100 liegt, während der Schließerkontakt 102 im Lastkreis der Sicherheitsrelais 100 liegt. An dem Öffnerkontakt 101 ist eine mit V_{cc} gekennzeichnete Energieversorgungsquelle 50 angeschlossen, die beispielsweise eine Spannung von 25 Volt bereitstellt. Die Energieversorgungsquelle 50 kann über den Öffnerkontakt 101 mit einem Master-Reset-Eingang des Monoflops 85 verbunden werden.

Der zweiten Steuereinrichtung 80 ist ebenfalls ein Sicherheitsrelais 110 zugeordnet, welches in der Ausgangsstufe 90 angeordnet ist. Das zweite Sicherheitsrelais 110 weist ebenfalls zwangsgeführte Kontakte auf. Die zwangsgeführten Kontakte weisen einen Öffnerkontakt 111 sowie einen Schließerkontakt 112 auf, der mit der sicherheitstechnischen Einrichtung 30 verbunden ist. Der Schließerkontakt 102 des Sicherheitsrelais 100 und der Schließerkontakt 112 des Sicherheitsrelais 110 sind in Reihe geschaltet, so dass die Steuereinrichtung 30 nur dann in Betrieb genommen werden kann, wenn beide Schließerkontakte geschlossen sind, das heißt wenn sowohl die erste Steuereinrichtung 70 als auch die zweite Steuereinrichtung 80 die Schließerkontakte 102 und 112 in den geschlossenen Zustand steuern. Die Steuereinrichtung 80 weist in ähnlicher Weise wie die Steuereinrichtung 70 einen Schalter 86 auf, der im Ansteuerkreis des Sicherheitsrelais 110 liegt. Das Steuersignal empfängt der Schalter 86 vom Monoflop 85, und zwar über dessen Q-Ausgang. Der Schließerkontakt 112 liegt im Lastkreis des Sicherheitsrelais 110. Der Öffnerkontakt 111.ist mit der Energieversorgungsquelle 50 und mit dem Mikroprozessor 72 der ersten Steuereinrichtung 70 verbunden. Auf diese Weise kann der Mikroprozessor 72 die Funktionsweise des Sicherheitsrelais 110 überwachen. Wenn zum Beispiel die Energieversorgungsquelle 50 auch bei einem Zustandswechsel des Sicherheitsrelais 110 nicht mit dem Mikroprozessor 71 verbunden wird, wird ein Fehler des Sicherheitsrelais 110 angenommen. Die zweite Steuereinrichtung 80 und das Sicherheitsrelais 110 bilden den Kanal 2 der Sicherheitsvorrichtung 10.

Die Versorgungsquelle 50 kann für notwendige Energieversorgung für die Steuereinrichtungen 70 und 80 sorgen.

Nachfolgend wird die Funktionsweise der in Fig. 1 gezeigten Sicherheitsvorrichtung 10 näher erläutert.

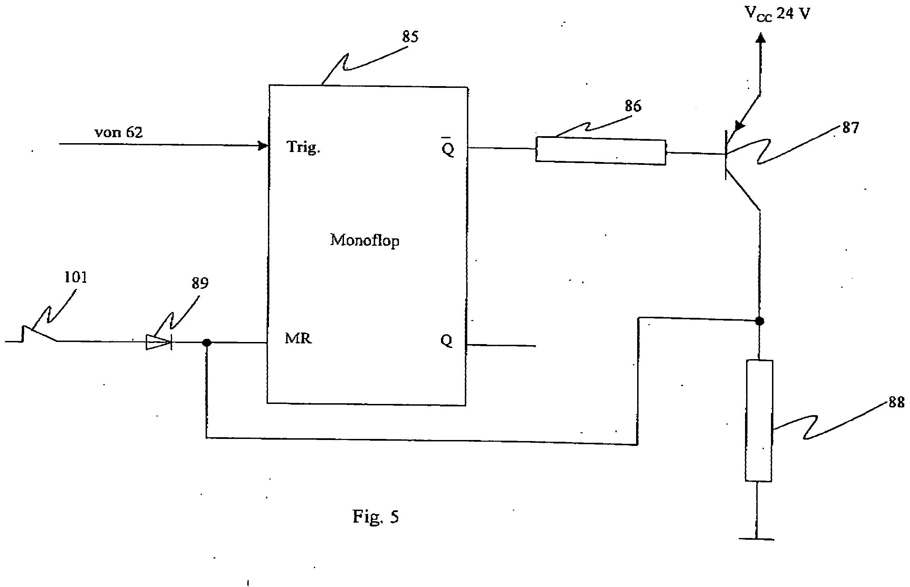

Angenommen sei, dass die sicherheitstechnische Einrichtung 30 in Betrieb genommen werden soll. Demzufolge wird über den Sensor 20 ein High-Pegel an das UND-Gatter 62 angelegt. Ferner wird angenommen, dass der Mikroprozessor 72 ordnungsgemäß arbeitet, so dass die Überwachungssignal-Erzeugungseinrichtung 71 das in Fig. 2 gezeigte Wechselsignal erzeugt und an den zweiten Eingang des UND-Gatters 62 anlegt. Am Ausgang des UND-Gatters 62 erscheint das dynamische Überwachungssignal, das sowohl dem Mikroprozessor 72 als auch dem Triggereingang des Monoflops 85 zugeführt. Arbeitet das Sicherheitsrelais 100 ordnungsgemäß, ist im Ruhezustand die Energieversorgungsquelle 50 über den Öffnerkontakt 101 an den Master-Reset-Eingang MR des Monoflops 85 angelegt, wie dies in Fig. 5 näher dargestellt ist. Da das vom UND-Gatter 62 kommende modulierte Eingangssignal ein Wechselsignal ist, steuert das Monoflop 85 den Schalter 86 an, der daraufhin den Schließerkontakt 112 des Sicherheitsrelais 110 schließt und den Öffnerkontakt 111 öffnet. Da auch der Mikroprozessor 72 das empfangene modulierte Eingangssignal als fehlerfrei interpretiert, veranlasst der Mikroprozessor den Schalter 76, den Schließerkontakt 102 des Sicherheitsrelais 100 zu schließen und den Öffnerkontakt 101 zu öffnen. Da beide Schließerkontakte 102 und 112 geschlossen sind, wird der Industrieroboter 40 an die Betriebsspannung V angeschaltet. Der Öffnerkontakt 101 des Sicherheitsrelais 100 ist geöffnet, so dass am MR-Eingang des Monoflops 85 keine Spannung mehr anliegt. Da das Monoflop 85 den Schließerkontakt 111 nur dann ansteuert, wenn auch Freigabesignal an dem MR-Eingang anliegt, ist eine Selbsthaltungsschaltung vorgesehen, die in Fig. 5 näher erläutert ist. Die Selbsthaltungsschaltung weist einen Schalter 87 auf, der beispielsweise als NPN-Transistor realisiert ist. Der Kollektor des Schalters 87 ist über einen Widerstand 88 auf Masse gelegt. Die Betriebsspannung V_{cc} ist am Emittereingang angelegt. Über einen Widerstand 86 ist die Basis des Transistors 87 mit dem *Q̅*-Ausgang des Monoflops 85 verbunden. Ein logischer Low-Pegel am *Q̅*-Ausgang, der während des Betriebs des Monoflops anliegt, sorgt dafür, dass die Betriebsspannung V_{cc} auf den MR-Eingang des Monoflops 85 rückgekoppelt wird, so dass die Betriebsspannung auch dann am MR-Eingang liegt, wenn der Öffner 101 des Sicherheitsrelais 100 geöffnet ist.

Nunmehr wird ein Notfall angenommen, bei dem der Sensor 20 zum Beispiel ein unerwünschtes Öffnen einer Schutztür signalisiert. Dies hat zur Folge, dass am Ausgang des Sensors 20 ein logischer Low-Pegel erzeugt wird, welcher den Ausgang des UND-Gatters 62 ebenfalls auf den logischen Low-Pegel setzt. Das Monoflop 85 erzeugt daraufhin am Q-Ausgang einen Low-Pegel, der den Schalter 86 derart ansteuert, dass der Schließerkontakt 112 geöffnet wird, woraufhin die sicherheitstechnische Einrichtung 30 abgeschaltet wird. Der Mikroprozessor 72 erkennt ebenfalls anhand des modulierten Eingangssignals, dass der Sensor 20 einen Notfall signalisiet hat und steuert über den Schalter 76 den Schließerkontakt 102 in den geöffneten Zustand. Im vorliegenden Beispiel wird die sicherheitstechnisch Einrichtung 30 somit von beiden Steuereinrichtungen 70 und 80 abgeschaltet.

Für den Fall, dass das Sicherheitsrelais 100 ordnungsgemäß funktioniert, wird in diesem Fall der zwangsgeführte Öffnerkontakt 101 geschlossen und die Betriebsspannung 50 an den Master-Reset-Eingang des Monoflops 85 angelegt. Wenn der Sensor 20 wieder einen High-Pegel erzeugt, kann der Industrieroboter, wie zuvor beschrieben, wieder an die Betriebsspannung V angeschaltet werden. Wenn jedoch das Sicherheitsrelais 100 fehlerhaft, das heißt der Schließerkontakt 102 öffnet nicht mehr, bleibt der Öffnerkontakt 101 im geöffneten Zustand und es wird kein Freigabesignal an das Monoflop 85 angelegt. Folglich kann die einmal ausgeschaltete sicherheitstechnische Einrichtung 30 nicht mehr angeschaltet werden. Denn in diesem Fall hält das Monoflop 85 den Schließerkontakt 112 des Sicherheitsrelais 110 im geöffneten Zustand. Mit anderen Worten steuert die Steuereinrichtung 80 den Schließerkontakt 112 nur dann in den geschlossenen Zustand an, wenn erstens der Mikroprozessor 72 der ersten Steuereinrichtung ordnungsgemäß arbeitet und somit die Überwachungssignal-Erzeugungseinrichtung 72 ein Wechselsignal erzeugt und zweitens das Sicherheitsrelais 100 ordnungsgemäß funktioniert, so dass über den Öffnerkontakt 101 das Freigabesignal an das Monoflop 85 angelegt wird.

Wichtig ist noch anzumerken, dass das in Fig. 5 gezeigte Monoflop 85 nach einem Abschalten der des Industrieroboters 40 selbst wieder zurückgesetzt wird. Wenn nach kurzer Zeit wieder ein Wechselsignal am Triggereingang des Monoflops 85 angelegt wird, kann das Monoflop 85 das Sicherheitsrelais 110 erst dann wieder ansteuern, wenn auch das Freigabesignal über den Öffnerkontakt 101 am MR-Eingang anliegt.

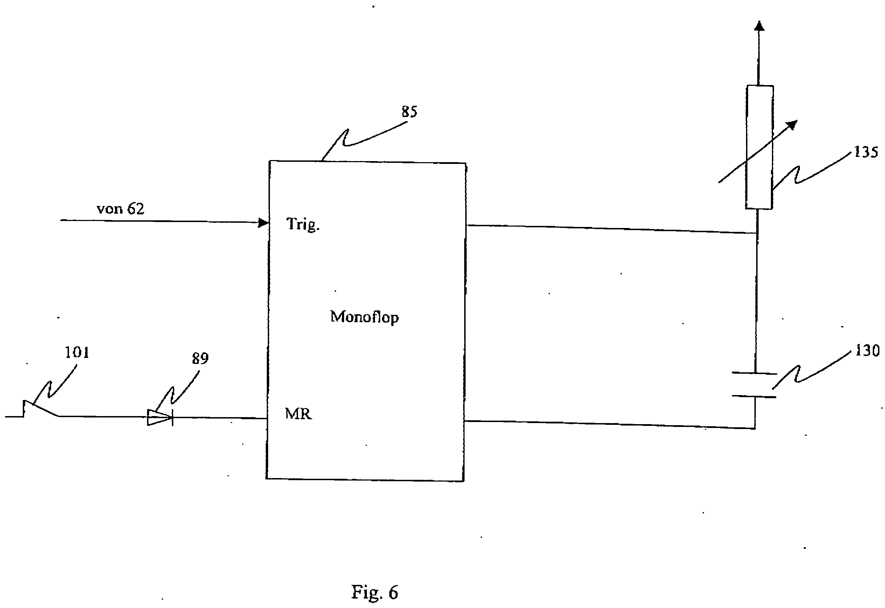

Bereits an dieser Stelle sei erwähnt, dass das Monoflop 85 über eine einstellbare Reaktionszeit verfügt. Hierzu ist beispielsweise ein RC-Glied mit dem Monoflop 85 verbunden, welches aus einem Potentiometer 135 und einem Kondensator bestehen kann. Diese Schaltung ist in Fig. 6 gezeigt. Über das Potentiometer 135 kann die Reaktionszeit des Monoflops 85 eingestellt werden. Die Reaktionszeit ist beispielsweise in dem Speicher 74 der ersten Steuereinrichtung 70 hinterlegt.

Der Ausgang der Steuereinrichtung 80 ist über eine Leitung 105 mit dem Mikroprozessor 72 verbunden. Der Mikroprozessor 72 kann das Betriebsverhalten der Steuereinrichtung 80 überwachen, indem er aus dem empfangenen modulierten Eingangssignal des UND-Gatters 62 und der Übertragungsfunktion des Monoflops 85 dessen Ausgangssignal berechnen kann. Die Übertragungsfunktion ist beispielsweise im Speicher 74 hinterlegt. Stimmen rückgekoppeltes Ausgangssignal des Monoflops 85 mit dem berechneten Ausgangssignal überein, so arbeitet die Steuereinrichtung 80 ordnungsgemäß. Andernfalls liegt ein Fehler vor. Erkennt der Mikroprozessor 72 einen solchen Fehler, kann er über den Schalter 76 den Schließerkontakt 102 des Sicherheitsrelais 100 öffnen, so dass die sicherheitstechnische Einrichtung 30 abgeschaltet wird. Alternativ oder fakultativ kann der Mikroprozessor 72 auch den Schalter 86 ansteuern, um den Schließerkontakt 112 des Sicherheitsrelais 110 zu öffnen.

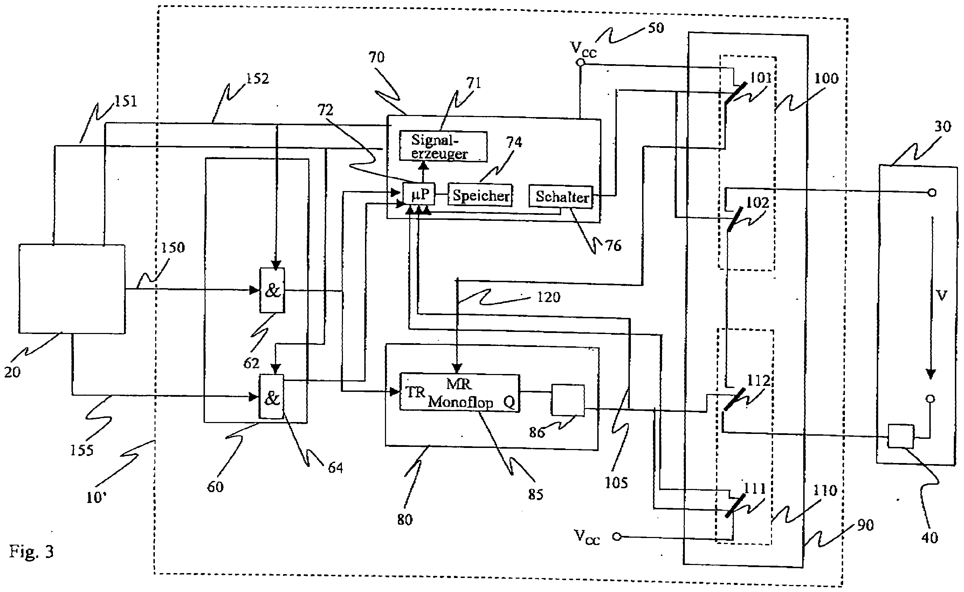

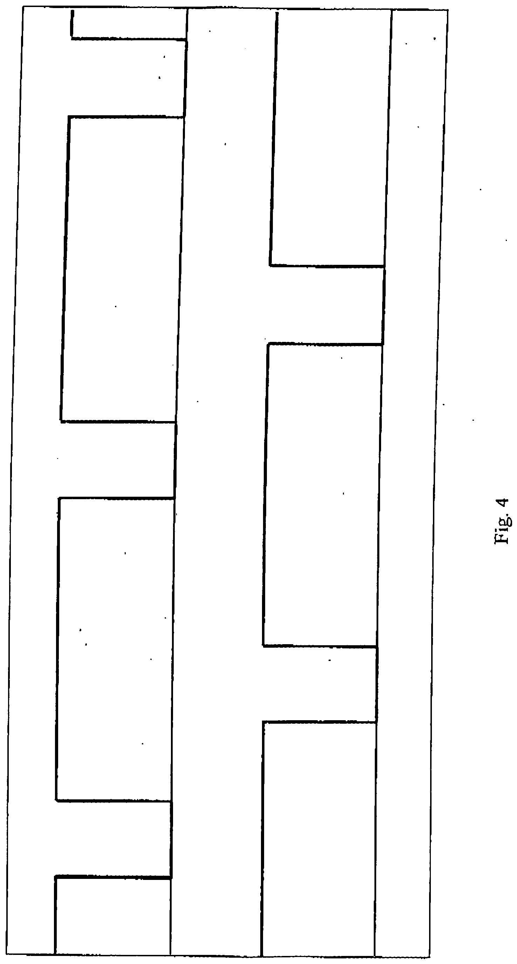

Fig. 3 zeigt eine weitere mehrkanalige Sicherheitsvorrichtung 10', die sich von der in Fig. 1 gezeigten Sicherheitsvorrichtung 10 dadurch unterscheidet, dass die Überwachungssignal-Erzeugungseinrichtung 71 der ersten Steuereinrichtung 70 zwei Überwachungssignale liefert und ein passiver Sensor 20, zum Beispiel ein Not-Aus-Taster, über digitale Anschlüsse (nicht dargestellt) an die Sicherheitsvorrichtung 10' angeschlossen ist. Wenn der Mikroprozessor 72 seine spezifizierten Funktionen ordnungsgemäß abarbeitet, erzeugt die Überwachungssignal-Erzeugungseinrichtung 71 die in Fig. 4 gezeigten Wechselsignale, die lediglich phasenverschoben zueinander sind. Auf diese Weise kann der an die Sicherheitsvorrichtung 10' angeschlossene passive Sensor 20 zweikanalig abgefragt werden, um so Kurzschlüsse und Querschlüsse in Eingangsleitungen 151 und 152 und in dessen Ausgangsleitungen 150 und 155 erkennen zu können. Die Eingangsstufe 60 weist neben dem UND-Gatter 62 ein weiteres UND-Gatter 64 auf. Das erste Überwachungssignal wird von der Überwachungssignal-Erzeugungseinrichtung 71 intern an einen Eingang des UND-Gatters 62 angelegt und über einen der digitalen Ausgänge und die Eingangsleitung 152 einem Eingang des Sensors 20 zugeführt. Das erste Überwachungssignal wird ferner über einen internen Taster 21 des Sensors 20 und die Ausgangsleitung 150 einem weiteren Eingang des UND-Gatters 62 zugeführt. In ähnlicher Weise wird das zweite Überwachungssignal von der Überwachungssignal-Erzeugungseinrichtung 71 intern an einen Eingang des UND-Gatters 64 angelegt und über den anderen digitalen Ausgang sowie über die Eingangsleitung 151 einem anderen Eingang des Sensors 20 zugeführt. Das zweite Überwachungssignal wird ferner über einen internen Taster 22 des Sensors 20 und die Ausgangsleitung 155 des Sensors 20 einem weiteren Eingang des UND-Gatters 64 zugeführt. Lediglich das Ausgangssignal des UND-Gatters 64 wird zum Mikroprozessor 72 zugeführt, während der Ausgang des UND-Gatters 62 sowohl mit dem Mikroprozessor 72 als auch mit dem Triggereingang des Monoflops 85 der zweiten Steuereinrichtung verbunden ist.

Die Funktionsweise der in Fig. 3 gezeigten Sicherheitsvorrichtung 10' entspricht im Wesentlichen der der in Fig. 1 gezeigten Sicherheitsvorrichtung 10, wobei zusätzlich, wie bereits erwähnt, Querschlüsse zwischen den Ausgangsleitungen 150 und 155 und den Eingangsleitungen 151 und 152 sowie Kurzschlüsse der Ausgangsleitungen 150 und 155 und/oder der Eingangsleitungen 151 und 152 festgestellt werden können. Tritt beispielsweise ein Kurzschluss zwischen der Ausgangsleitung 155 und Masse oder der Eingangsleitung 151 und Masse auf, so wird an den entsprechenden Eingang des UND-Gatters 64 ein Low-Pegel angelegt, der dazu führt, dass auch der Ausgang des UND-Gatters 64 auf einem Low-Pegel liegt. Dieser Zustand wird dem Mikroprozessor 72 signalisiert, der aus dem gemeldeten Zustand einen Fehler erkennt. Daraufhin steuert der Mikroprozessor den Schalter 76 im Ansteuerkreis des Sicherheitsrelais 100 derart an, dass der Schließerkontakt 102 geöffnet wird und somit die sicherheitstechnische Einrichtung 30 abgeschaltet werden kann.

In ähnlicher Weise wird der mit der Anschlussleitung 150 verbundene Eingang des UND-Gatters 62 auf Low gesetzt, wenn ein Kurzschluss hinsichtlich der Leitung 150 oder 152 nach Masse aufgetreten ist. Eine logische Null am Eingang des UND-Gatters 62 sorgt dafür, dass auch der Ausgang auf logisch Null liegt, so dass das Monoflop 85 ebenfalls eine logische Null am Ausgang liefert. Unter Ansprechen auf das Ausgangssignal des Monoflops 85 wird der Schalter 86 derart angesteuert, dass der Schließerkontakt 112 geöffnet und somit die sicherheitstechnische Einrichtung 30 abgeschaltet wird. Zudem steuert der Mikroprozessor 72 unter Ansprechen auf die logische Null am Ausgang des UND-Gatters 62 den Schalter 76 derart an, dass der Schließerkontakt 102 geöffnet und somit die sicherheitstechnische Einrichtung 30 abgeschaltet wird.

Tritt ein Querschluss zwischen den Eingangsleitungen 151 und 152 oder zwischen den Ausgangsleitungen 150 und 155 auf, so werden statische Signale mit gleichem Potential an die Eingänge der UND-Gatter 62 und 64 gelegt. Demzufolge führt das am Ausgang des UND-Gatters 62 anliegende statische Signal dazu, dass das Monoflops 85 den Schalter 86 derart ansteuert, dass der Schließerkontakt 112 öffnet und somit die sicherheitstechnische Einrichtung 30 abschaltet. Ferner kann das am Ausgang des UND-Gatters 62 und/oder 64 anliegende statische Signal dazu führen, dass der Mikroprozessor 72 den Schalter 76 derart ansteuert, dass der Schließerkontakt 102 geöffnet und somit die sicherheitstechnische Einrichtung 30 abgeschaltet wird.

Nunmehr wird der Fall betrachtet, dass die Ausgangsleitung 150 und/oder die Eingangsleitung 152 gegen die Betriebsspannung kurzgeschlossen wird. In diesem Fall liegen wieder zwei statische Signale gleichen Potentials am UND-Gatter 62 an, was dazu führt, dass das statische Ausgangssignal des UND-Gatters 62 das Monoflops 85 und somit den Schalter 86 derart ansteuert, dass der Schließerkontakt 112 geöffnet und somit die sicherheitstechnische Einrichtung 30 abgeschaltet wird. Ferner kann das am Ausgang des UND-Gatters 62 anliegende statische Signal dazu führen, dass der Mikroprozessor 72 den Schalter 76 derart ansteuert, dass der Schließerkontakt 102 geöffnet und somit die sicherheitstechnische Einrichtung 30 abgeschaltet wird.

Nunmehr wird der Fall betrachtet, dass die Ausgangsleitung 155 und/oder die Eingangsleitung 151 gegen die Betriebsspannung kurzgeschlossen wird. In diesem Fall liegen wieder zwei statische Signale gleichen Potentials am UND-Gatter 64 an. Unter Ansprechen auf das statische Ausgangssignal des UND-Gatters 62 steuert der Mikroprozessor 72 den Schalter 76 derart an, dass der Schließerkontakt 102 geöffnet und somit die sicherheitstechnische Einrichtung 30 abgeschaltet wird.

Für den Fall, dass es sich bei dem Sensor 20 um einen aktiven Sensor handelt, fehlen die beiden Anschlussleitungen 151 und 152, so dass die beiden von der Überwachungssignal-Erzeugungseinrichtung 71 erzeugten Überwachungssignale nicht dem Sensor 20 zugeführt werden.

Dank der Sicherheitsvorrichtung ist es nunmehr möglich, dass die zweite, hardwarebasierte Steuereinrichtung 80 die korrekte Funktionsweise des der ersten Steuereinrichtung 70 zugeordneten Sicherheitsrelais 100 kontrollieren und bei Auftritt eines Fehlers dafür sorgen kann, dass die sicherheitstechnische Einrichtung 30 abgeschaltet wird. Dadurch ist auch sichergestellt, dass die zweite Steuereinrichtung 80 erst dann den Betrieb aufnimmt, wenn das Freigabesignal des Kanals 1 am MR-Eingang anliegt.

## Patentansprüche

1. Sicherheitsvorrichtung zum mehrkanaligen Steuern einer sicherheitstechnischen Einrichtung (40), mit einer ersten, mikroprozessorgesteuerten Steuereinrichtung (70), die eine Signalerzeugungseinrichtung (71) zum Erzeugen eines ersten Überwachungssignals aufweist, welches den aktuellen Betriebszustand der ersten Steuereinrichtung (70) anzeigt,
einer zweiten Steuereinrichtung (80),
einer von der ersten und zweiten Steuereinrichtung (70, 80) ansteuerbaren Schalteinrichtung (90), die die sicherheitstechnische Einrichtung (40) einschalten oder in einen gesicherten Zustand fahren kann,
einer mit der ersten, mikroprozessorgesteuerten Einrichtung (70) und der zweiten Steuereinrichtung (80) verbundenen Eingangsstufe (60), die zum Modulieren eines von einer extern anschaltbaren Sensoreinrichtung (20) kommenden ersten Eingangssignals mit dem von der Signalerzeugungseinrichtung (71) erzeugten ersten Überwachungssignal ausgebildet ist,
wobei die zweite Steuereinrichtung (80) eine hardwarebasierte Schalteinrichtung (85) aufweist, die unter Ansprechen auf das erste modulierte Eingangssignal die Schalteinrichtung (90) derart ansteuert, dass die sicherheitstechnische Einrichtung (40) bei einem fehlerhaften Betrieb der ersten Steuereinrichtung (70) in einen sicheren Zustand gefahren werden kann,
**dadurch gekennzeichnet, dass**
die Signalerzeugungseinrichtung (71) ein zweites Überwachungssignal liefert,
die Eingangsstufe (60) zum Modulieren eines von der extern anschaltbaren Sensoreinrichtung (20) kommenden zweiten Eingangssignals mit dem von der Signalerzeugungseinrichtung (71) erzeugten zweiten Überwachungssignal ausgebildet ist, wobei das zweite modulierte Eingangssignal zur Auswertung der ersten Steuereinrichtung (70) und das erste modulierte Eingangsignal zur Auswertung der ersten und zweiten Steuereinrichtung (70, 80) zugeführt wird.

2. Sicherheitsvorrichtung nach Anspruch 1,
**dadurch gekennzeichnet, dass**
die extern anschaltbare Sensoreinrichtung (20) ein passiver Sensor ist,
das erste Überwachungssignal mittels eines ersten Tasters über den extern angeschalteten passiven Sensor als das erste Eingangssignal der Eingangsstufe (60) zuführbar ist, und dass
das zweite Überwachungssignal mittels eines zweiten Tasters über den extern angeschalteten passiven Sensor (20) als das zweite Eingangssignal der Eingangsstufe (60) zuführbar ist.

## Claims

1. A safety device for multichannel controlling of a safety-related device (40), comprising a first microprocessor-controlled control device (70) including a signal generation device (71) for generating a first monitoring signal that indicates the current operating state of the first control device (70);
a second control device (80);
a switching device (90) drivable by the first and second control devices (70, 80), which is able to switch on the safety-related device (40) or drive it into a safe state;
an input stage (60) connected to the first microprocessor-controlled device (70) and to the second control device (80), which is adapted for modulating a first input signal arriving from an externally connectable sensor device (20) with the first monitoring signal generated by the signal generation device (71); wherein the second control device (80) comprises a hardware-based switching device (85) which controls the switching device (90) in response to the first modulated input signal in such a manner that in case of faulty operation of the first control device (70) the safety-related device (40) can be driven into a safe state;
**characterized in that**
the signal generation device (71) provides a second monitoring signal;
the input stage (60) is adapted for modulating a second input signal arriving from the externally connectable sensor device (20) with the second monitoring signal generated by the signal generation device (71), wherein the second modulated input signal is supplied to the first control device (70) for evaluation, and wherein the first modulated input signal is supplied to the first and second control devices (70, 80) for evaluation.

2. The safety device according to claim 1,
**characterized in that**
the externally connectable sensor device (20) is a passive sensor;
the first monitoring signal can be supplied by means of a first switch via the externally connected passive sensor to the input stage (60) as the first input signal; and that
the second monitoring signal can be supplied by means of a second switch via the externally connected passive sensor to the input stage (60) as the second input signal.

## Revendications

1. Dispositif de sécurité pour la commande à plusieurs canaux d'une installation de sécurité technique (40), comportant :
un premier dispositif de commande (70) commandé par microprocesseur et pourvu d'un dispositif de génération de signaux (71) destiné à générer un premier signal de surveillance indiquant l'état de service actuel du premier dispositif de commande (70),
un deuxième dispositif de commande (80),
un dispositif de commutation (90) commandé par les premier et deuxième dispositifs de commande (70, 80), permettant d'activer l'installation de sécurité technique (40) ou de la commuter vers un état sécurisé,
un étage d'entrée (60) relié au premier dispositif (70) commandé par microprocesseur et au deuxième dispositif de commande (80), prévu pour moduler un premier signal d'entrée provenant d'un dispositif capteur (20) activable extérieurement avec le premier signal de surveillance généré par le dispositif de génération de signaux (71),
dans lequel le deuxième dispositif de commande (80) comporte un dispositif de commutation (85) assisté par matériel, lequel commande le dispositif de commutation (90) en réaction au premier signal d'entrée modulé de manière à permettre la commutation de l'installation de sécurité technique (40) vers un état sécurisé en cas de fonctionnement défectueux du premier dispositif de commande (70),
**caractérisé en ce que** :
le dispositif de génération de signaux (71) délivre un deuxième signal de surveillance,
l'étage d'entrée (60) est prévu pour moduler un deuxième signal d'entrée provenant du dispositif capteur (20) activable extérieurement avec le deuxième signal de surveillance généré par le dispositif de génération de signaux (71), dans lequel le deuxième signal d'entrée modulé est conduit vers l'évaluation du premier dispositif de commande (70) et le premier signal d'entrée modulé vers l'évaluation des premier et deuxième dispositifs de commande (70, 80).

2. Dispositif de sécurité selon la revendication 1,
**caractérisé en ce que** :
le dispositif capteur (20) activable extérieurement est un capteur passif,
le premier signal de surveillance peut être conduit en tant que premier signal d'entrée à l'étage d'entrée (60), par le capteur passif activé extérieurement, au moyen d'un premier bouton, et
**en ce que** le deuxième signal de surveillance peut être conduit en tant que deuxième signal d'entrée à l'étage d'entrée (60), par le capteur passif (20) activé extérieurement, au moyen d'un deuxième bouton.
